# EUROPEAN PATENT SPECIFICATION

(11) **EP 1 983 795 B1**
(45) Date of publication and mention of the grant of the patent: **12.02.2014**
(21) Application number: 08007523.7
(22) Date of filing: 17.04.2008
(51) Int. Cl.: H04W 36/02

(54) **Method of performing vertical handover between different wireless networks**
Verfahren zur Durchführung einer vertikalen Weiterreichung zwischen verschiedenen drahtlosen Netzwerken
Procédé pour effectuer un transfert vertical entre différents réseaux sans fil

(30) Priority: 20.04.2007 KR 20070038813
(43) Date of publication of application: 22.10.2008
(73) Proprietor: Postech Academy-Industry- Foundation, Pohang-shi Kyungsangbuk-do (KR)
(72) Inventor: Baek, Joo Young, Nam-gu, Pohang-shi Kyungsangbuk-do (KR); Lim, Wan Seon, Nam-gu, Pohang-shi Kyungsangbuk-do (KR); Kim, Woo Jae, Nam-gu, Pohang-shi Kyungsangbuk-do (KR); Suh, Young Joo, Nam-gu, Pohang-shi Kyungsangbuk-do (KR)
(74) Representative: Samson & Partner

(56) References cited:
- EP-A- 1 705 866
- WO-A-2006/052563
- US-A1- 2005 243 870
- US-A1- 2006 251 022
- AD HOC: "Handover Commands Thoughts and Open Issues" IEEE 802.21 MEDIA INDEPENDENT HANDOVER, DCN:21-07-0XXX-00-0000-LB1C-HANDOVER -ISSUES, [Online] March 2007 (2007-03), pages 1-8, XP002495181 Retrieved from the Internet: URL:ieee802.org-21-doctree-2007_Meeting_Do cs-2007-03_m...> [retrieved on 2008-08-22]
- HEEJIN JANG SAMSUNG AIT JUNGHOON JEE ETRI YOUN-HEE HAN KUT SOOHONG DANIEL PARK SAMSUNG ELECTRONICS JAESUN CHA ETRI: "Mobile IPv6 Fast Handovers over IEEE 802.16e Networks; draft-ietf-mipshop-fh80216e-00.txt" IETF STANDARD-WORKING-DRAFT, INTERNET ENGINEERING TASK FORCE, IETF, CH, vol. mipshop, 12 April 2006 (2006-04-12), XP015045573 ISSN: 0000-0004

## Description

The present invention relates to a vertical handover technique between different wireless networks. In particular, the present invention relates to a method of performing a vertical handover between different networks in which a WiMAX (Worldwide Interoperability for Microwave Access) (or a WiMAX (or WiBro) (Wireless Broadband Internet)) network and a WLAN (wireless LAN) network are coexisted, based on media independent handover (MIH).

As well known in the art, as a wireless network is increasingly demanded, various wireless technologies, such as, WiMAX (or WiBro), WLAN, and the like, have been developed. Accordingly, a multi mode terminal (MMT) that has an interface for supporting two or more wireless technologies is used for communication in a heterogeneous network system.

In particular, for a wireless communication service in the heterogeneous network system, a vertical handover between different networks needs to be stably and seamlessly performed. The vertical handover is a next-generation network concept against a horizontal handover.

In a 4G (4-Generation) network in which different radio access technologies coexist, it has been recognized that the vertical handover is an important factor for efficiently utilizing the network resources. The vertical handover should have the following features: an existing operation should be maintained regardless of a radio access network, which is used at a lower part in an upper layer, such as an application; and seamless mobility should be supported to provide a user with seamless services. For the vertical handover, the standardization of the mobile IP (Internet Protocol) is in progress by the IETF (Internet Engineering Task Force) working group. When the 4G network is expanded to an all-IP network, since the vertical handover also operates based on the mobile IP, the vertical handover between different networks is attracting attention.

Considering the vertical handover between a 3G network and a WLAN network, the 3G network can provide wide cell coverage and user's mobility. However, it has a low data transfer rate due to small bandwidth, and hence a better service suitable for a fast network is rarely provided.

In case of the WLAN network, although fast data communication can be performed enough to support data communication at 54 Mbps, the size of cell coverage is small, and the user's mobility is not effectively provided. For this reason, studies for efficient vertical handover between the 3G network and the WLAN network are actively in progress.

Meanwhile, in case of WiMAX (or WiBro) based on Mobile IPv6, which becomes a main technology for next-generation mobile communication, as a system for broadband wireless Internet access, the cell coverage is wider than WLAN, high mobility is supported, and a large bandwidth is provided, compared with the 3G network. Therefore, with the studies for the efficient vertical handover between the 3G network and the WiMAX (or WiBro), the network resources can be effectively utilized through the vertical handover therebetween.

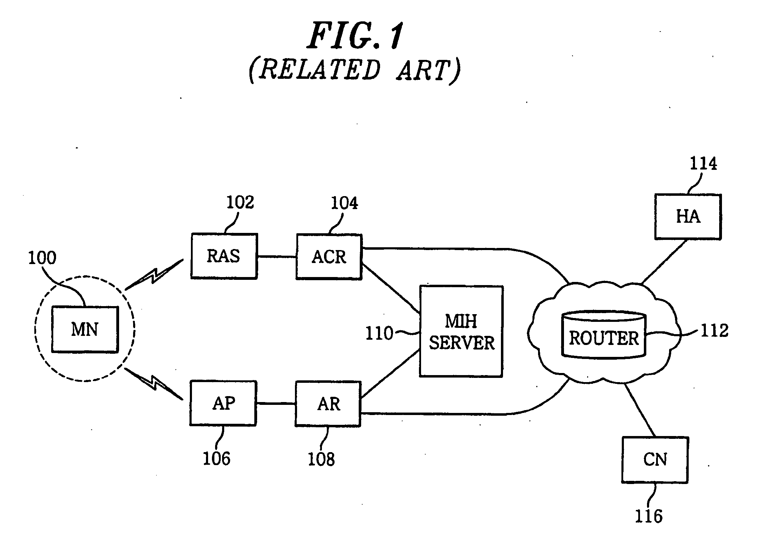

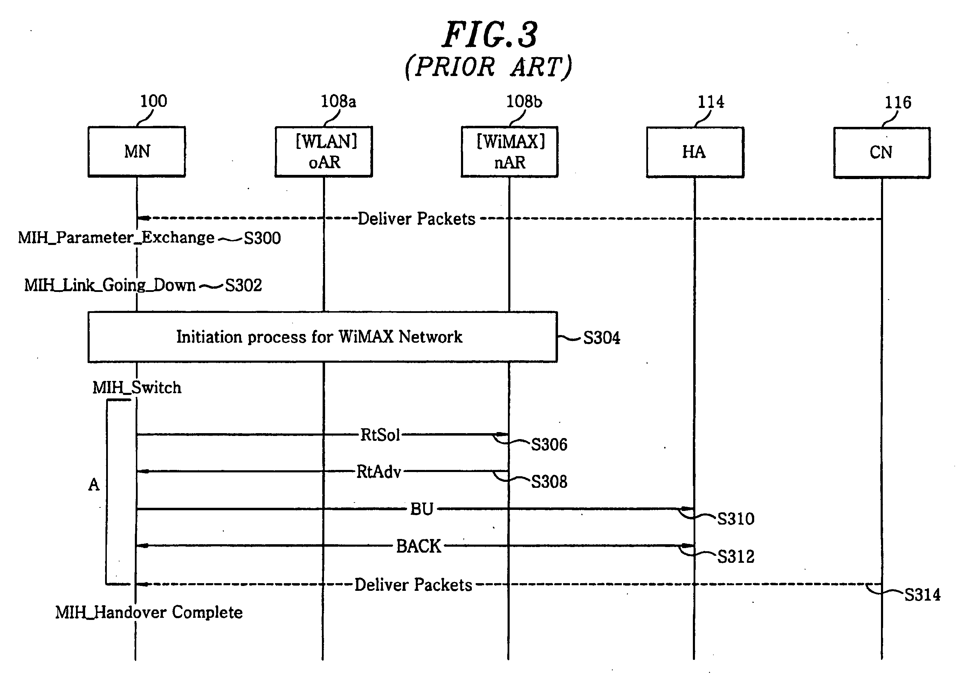

FIG. 3 is a sequence chart illustrating a vertical handover process between WiMAX (or WiBro) and WLAN using media independent handover (hereinafter, referred to as "MIH") in a heterogeneous network system, for example, a broadband wireless network system shown in FIG. 1.

In FIG. 3, a MN (mobile node) 100 refers to a multi mode terminal to provide interfaces for WiMAX (or WiBro) and WLAN. An oAR 108a refers to an old access router to manage a subnetwork for a WLAN network through which a wireless service is currently provided to the MN 100, and a nAR 108b refers to a new access router to manage a new subnetwork for a WiMAX (or WiBro) network, to which the MN 100 is to be handed-over.

A following description will be given by way of an example where a vertical handover to the WiMAX (or WiBro) network while being serviced through the WLAN network is achieved. Of course, it is also understood that a contrary concept may be applied.

While a CN (correspondent node) 116 deliver s packets to the MN 100 through a WLAN network, which includes an AP (access point) 106 and an AR (access router) 108 (see, FIG. 1), the MN 100 checks a current link state through MIH_Link_Parameter_Report message. Then, if it is determined that the current link state should be switched through the MIH_Parameter_Exchange message at step S300, the MN 100 notifies the IPv6 (MIPv6) of a MIH_LINK_Going_Down message indicative of a preliminary time when handover is needed at step S302.

Thereafter, the MN 100 begins to prepare a handover to a new network on the basis of the preliminary time. That is, the MN 100 initializes a process for the WiMAX (or WiBro) network and activates a WiMAX (or WiBro) interface (not shown) of the MN 100 at step S304.

Next, the MN 100 transmits a router solicitation (RtSol) message to the nAR 108b through the AP 106 at step S306, and receives a router advertisement (RtAdv) message from the nAR 108b as a response to the router solicitation message or receives a router advertisement (RtAdv) message which is cyclically transmitted from the nAR 108b. Then, the MN 100 realizes a switchover to the WiMAX (or WiBro) network through the router advertisement (RA) at step S308.

Subsequently, the MN 100 transmits a BU (Binding Update) message for a network setup to a HA (home agent) 114 at step S310, and receives an acknowledgement of the BU message (BACK) from the HA 114 at step S312.

Finally, the MN 100 receives packets from the CN 116 through the WiMAX (or WiBro) network which includes an RAS (radio access station) 102 and an ACR (access control router) 104 (see, FIG. 1) at step S314.

For the vertical handover illustrated in FIG. 3, packets may be lost for a duration from the transmission of the BU message to the receipt of the acknowledge thereto in the course of the handover from a previous network to a new network, that is, the duration indicated by a symbol "A".

Additionally, IEEE 802.11 "MEDIA INDEPENDENT HANDOVER" [XP-002495181] discloses Handover Commands that comprises MIP_Fast_Ba, MIP_Handover_initiate.REQ, MIP_Handover_initiate.ACK, Link Establishment, Tunnel Packets and Forward Packets.

It is, therefore, a primary object of the present invention to provide a method of providing a vertical handover between different wireless networks including a WiMAX (or WiBro) network and a WLAN network, which is capable of reducing a packet loss while providing mobility. This object is accomplished by subject-matter as defined in independent claim 1.

The above and other objects and features of the present invention will become apparent from the following description of embodiments given in conjunction with the accompanying drawings, in which:
FIG. 1 is a block diagram of a broadband wireless network system in which a WiMAX (or WiBro) network and a WLAN network are coexisted, which is suitable for a vertical handover between the WiMAX (or WiBro) and the WLAN networks, in accordance with a related art;
FIG. 2 is a sequence chart illustrating a vertical handover process between a WiMAX (or WiBro) network and a WLAN network in accordance with an embodiment of the invention; and
FIG. 3 is a sequence chart illustrating a vertical handover process between a WiMAX (or WiBro) network and a WLAN network in accordance with a prior art.

Embodiments of the present invention will be described in detail with reference to the accompanying drawings.

FIG. 1 is a block diagram of a broadband wireless network system in which a WiMAX (or WiBro) network and a WLAN network are coexisted in accordance with a related art.

The broadband wireless network system shown in FIG. 1 performs a vertical handover between a WiMAX (or WiBro) network and a WLAN network. The broadband network system includes: a MN (mobile node) (referred to also as "MMT" (multi mode terminal)) 100 for providing an interface for WiMAX- (or WiBro-) based wireless communication and an interface for WLAN-based wireless communication; a RAS (radio access station) 102 for transmitting and receiving radio signals with respect to the MN 100 for the WiMAX (or WiBro)-based wireless communication; an ACR (access control router) 104 for controlling the RAS 102; an AP (access point) 106 for transmitting and receiving radio signals with respect to the MN 100; an AR (access router) 108 for routing radio signals from the AP 106; an MIHS (MIH server) 110 for providing an event service, a command service, and an information service such that a session handoff can be appropriately performed between different networks or media; a router 112 for selective routing radio signals from the ACR 104 or the AR 108; a HA (home agent) 114 for managing associated information for the WiMAX (or WiBro)-based wireless communication and the WLAN-based wireless communication; and a CN (correspondent node) 116 for providing various contents to the MN 100 through the WLAN network or the WiMAX (or WiBro) network.

The AR 108 includes a plurality of ARs 108a and 108b. The ARs 108a and 198b serve to manage their associated subnetworks for the WLAN network and the WiMAX (or WiBro) network, respectively. A first AR 108a refers to as an oAR indicative of an old access router, through which a wireless service is currently provided to the MN 100. A second AR 108b refers to as a nAR 108b indicative of a new access router, to which the MN 100 is to be handed-over.

At the time when the vertical handover is needed, the MN 100 fallen within a subnetwork managed by the oAR 108a transmits information on a new access router to which the MN 100 is handed-over to the oAR 108a. The information is then relayed to the new access router, i.e., the nAR 108b, to form a tunnel between the oAR 108a and the nAR 108b. Packets to be provided to the MN 100 immediately before being handed-over are then buffered in the oAR 108a. After the achievement of the handover, the buffered packets are sent to the nAR 108b through the tunnel formed between the oAR 108a and nAR 108b, thereby preventing a packet loss during the handover.

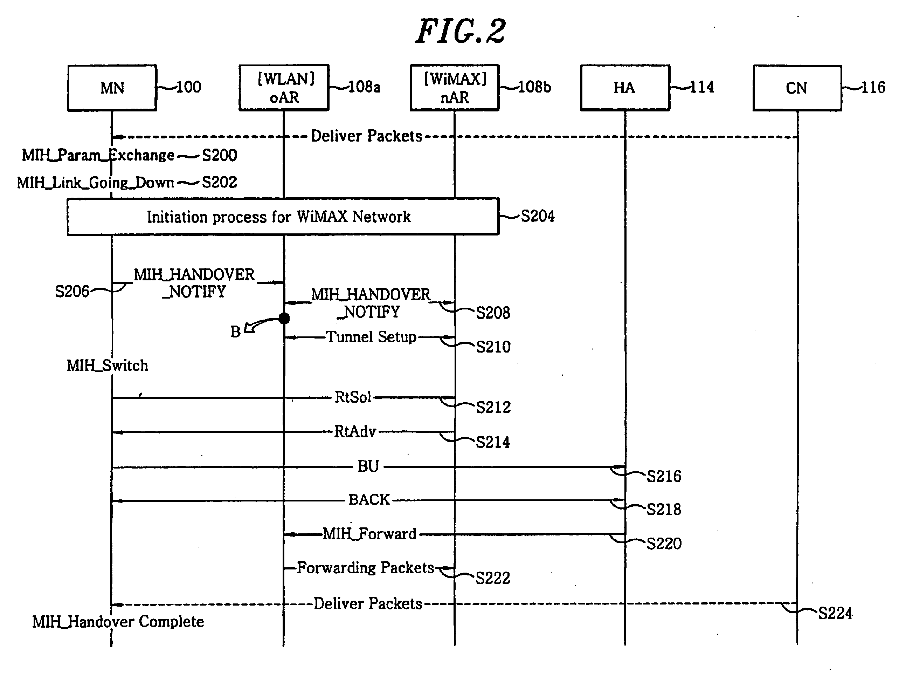

FIG. 2 is a sequence chart illustrating a vertical handover process performed in broadband wireless network system of FIG. 1 in accordance with an embodiment of the invention.

According to the method of the present invention, the vertical handover between different networks is implemented with an MIH technology, which is one of the IEEE standard technologies for supporting various networks in a vertical environment, in which WiMAX (or WiBro) and WLAN are mixed, and mobile MIPv6 based on MIH technology, which provides mobility. To do this, the mobile IPv6 is installed in the MM 100 and HA 114. Further, additional MIH messages are newly defined, in addition to the MIH messages described with reference to FIG. 3, and the newly defined MIH messages are employed in the broadband wireless network system, thereby preventing a loss of data packets. The newly defined MIH messages are explained as follows.
1. Handover Notify Message (MIH_Handover_Notify): This message is to notify a handover to a new network. When an old access router, managing a subnetwork within which a mobile node is serviced, receives the MIH Handover message from the mobile node, the old access router recognizes the new access router to which the mobile node is handed-over, and transmits the MIH handover message together with an address of the old access router to the new access router.
   The new access router, that receives the handover notify message, generates a tunnel with the address of the old access router as an exit point, and transmits a response to the handover notify message to the old access router. The old access router receives the response to the handover notify message, and then generates a tunnel with the address of the new access router as an exit point. Further, the old access router begins to buffer packets to be transmitted to the mobile node.
2. Forward Message (MIH_FORWARD): This message is transmitted from a home agent to an old access router after the home agent receives a BU message from a mobile node and then returns a response to the BU message. This message instructs the old access router to forward packets buffered in the old access router to a new access router of the handed-over new network while the mobile node performs a registration procedure related to the mobile IPv6.

With reference to FIG. 2, a description will be given by way of an example where a handover to, e.g., a WiMAX network of either a WiMAX network or a WiBro network from a WLAN network is performed. In this case, a first network is referred to as the WLAN network, and a second network is referred to the WiMAX network. Accordingly, in FIG. 1, the first network includes the AP 106 and the AR 108, and the second network includes the RAS 102 and the ACR 104.

First, at step S200, while packets are transmitted from the CN 116 to the MN 100 through the first network, i.e., the WLAN network, the MN 100 checks a current link state through a MIH_Link_Parameter_Report message.

Then, at step s202, if it is determined through a MIN_Parameter_Exchange that the link state should be switched, a MIH_LINK_Going_Down message indicative of a preliminary time when a handover is needed is notified to the mobile IPv6 installed in the MN 100.

At step S204, on the basis of the preliminary time on the MIH_LINK_Going_Down message, the MN 100 prepares the handover to a new network. That is, the MN 100 initializes a process for the WiMAX network to activate a WiMAX interface (not shown) of the MN 100.

Next, at step S206, the MN 100 transmits a handover notify message (MIH_Handover_Notify) to the oAR 108a, wherein the handover notify message includes an IP address of the MN 100 and a destination address of the nAR 108b to which the MN 100 is to be handed-over.

At step S208, the oAR 108a recognizes the destination address of the nAR 108b from the handover notify message and then transmits a handover request message (MIH_Handover_Notify_request) to the nAR 108b, wherein the handover request message includes a source address of the oAR 108a.

Thereafter, at step S210, the nAR 108b transmits a handover response message (MIH_Handover_Notify_response) to the oAR 108a as a reply to the handover request message, and generates a tunnel with the source address included in the handover request message as an exit point. After receiving the handover response message, the oAR 108a starts to buffer data packets to be transmitted from the CN 116 to the MN 100. In addition, the oAR 108a generates a tunnel with the destination address of the nAR 108b as an exit point. A symbol "B" in FIG. 2 denotes a data buffering start point.

In this way, by exchanging such handover messages between the old AR 108a and the new AR 108b, the tunnel between them is formed.

After that, the MN 100 changes the WLAN interface to the WiMAX interface in accordance with a switchover message (MIH_Switch) provided from the mobile IPv6. In this way, the wireless service for the MN 100 is changed from the WLAN network to the WiMAX network.

Usually, movement detection for detecting that the MN 100 moves to a new network is recognized through an advertisement message from the new network. However, a router solicitation message (RtSol) is transmitted, thereby reducing a time required for the movement detection.

More specifically, at step S212, the MN 100 transmits the router solicitation (RtSol) message to the nAR 108b through the AP 106.

At Step S212, the MN 100 receives a router advertisement message (RtAdv) which is transmitted from the nAR 108b as a response to the router solicitation message or which is cyclically transmitted from the nAR 108b. Accordingly, the MN 100 recognizes through the router advertisement message (RtAdv) that the handover from the WiMAX network to the WLAN network is achieved.

Next, at step S216, the MN 100 transmits a BU (Binding Update) message for a network setup to the HA 114 to inform that the handover is performed.

At step S218 and S220, the HA 114 transmits a BACK message to the MN 100 which is served by the HA 114 as a response to the BU message; and the HA 114 simultaneously transmits a forward message (MIH_FORWARD) to the oAR 108a. The forward message serves to instruct the oAR 108a to transmit the packets buffered in the oAR 108a, through which the wireless service is provided to the MN 100 immediately before being handed-over, to the nAR 108b.

Then, at step S222, the oAR 108a forwards the buffered packets to the nAR 108b through the tunnel formed between the oAR 108a and nAR 108b.

Subsequently, at step S224, the MN 100 receives packets from the CN 116 through the nAR 108b in the handed-over WiMAX network. Therefore, a packet loss, which may occur while the procedures indicated by symbol "B" of FIG. 2 are performed, can be reduced, and mobility can be provided.

While the present invention has been described with respect to the preferred embodiment, it will be apparent to those skilled in the art that various changes and modifications may be made without departing from the scope of the present invention as defined in the following claims.

## Claims

1. A method of performing a vertical handover between different wireless networks based on media independent handover (MIH), the method comprising the steps of:
(a) while receiving packets through a first network in a mobile node (S200), checking a link state of the first network to transmit a handover notify message from the mobile node to an old access router (S206) through which a wireless service is currently provided to the mobile node;
(b) transmitting a handover request message from the old access router to a new access router (S208) to form a tunnel to exit toward the old access router (S210);
(c) buffering in the old access router packets to be transmitted to the mobile node through the first network (B);
(d) changing the wireless service from the first network to the second network for the mobile node (S214);
(e) transmitting the packets buffered in the old access router to the new access router (S222); and
(f) receiving packets in the mobile node through the second network (S224)
wherein the step (e) includes the steps of:
transmitting a forward message from a home agent to the access router (S220); and
forwarding the buffered packets to the new access router through the tunnel formed between the old and the new access router (S222).

2. The method of claim 1, wherein the step (d) includes the steps of:
transmitting a router solicitation message to the new access router from the mobile node (S212); and
transmitting a router advertisement message from the new access router to the mobile node as a response to the router solicitation message (S214);
transmitting a BU (Binding Update) message from the mobile node to the home agent (S216);
transmitting an acknowledge message to the mobile node as a response to the BU message (S218).

3. The method of claim 1, wherein, in the step (a), the handover notify message includes a destination address of the new access router to which the mobile node is handed-over.

4. The method of claim 1, wherein the handover request message includes a source address of the old access router, and wherein the tunnel is generated with the source address as an exit point.

5. The method of claim 3, further comprising the step of:
generating a tunnel with the destination address as exit point (S210) after the step (b).

6. The method of claim 1, wherein the first network is one of a WLAN ( wireless LAN) network and a WiMAX (Worldwide Interoperability for Microwave Access) network, and the second network is the other one of the WLAN network and the WiMAX network.

7. The method of claim 1, wherein the first network is one of a WLAN ( wireless LAN) network and a WiBro (wireless broband Internet) network, and the second network is the other one of the WLAN network and the WiBro network.

8. The method of claim 1, wherein the mobile node has the mobile Internet protocol v6 (MIPv6) installed therein.

## Patentansprüche

1. Ein Verfahren zum Durchführen eines vertikalen Handover zwischen verschiedenen drahtlosen Netzwerken basierend auf Media Independent Handover (MIH), das Verfahren die Schritte umfassend:
(a) während in einem mobilen Knoten Pakete durch ein erstes Netzwerk empfangen werden (S200), Überprüfen eines Verbindungszustands des ersten Netzwerks, um eine Handover-Benachrichtigungsnachricht von dem mobilen Knoten an einen alten Zugangsrouter zu übertragen (S206), durch welchen derzeit ein drahtloser Dienst an den mobilen Knoten bereitgestellt wird;
(b) Übertragen einer Handover-Anfragenachricht von dem alten Zugangsrouter an einen neuen Zugangsrouter (S208), um einen Tunnel mit Ausgang in Richtung des alten Zugangsrouters zu bilden (S210);
(c) Puffern von durch das erste Netzwerk an den mobilen Knoten zu übertragenden Paketen in dem alten Zugangsrouter;
(d) Wechseln des drahtlosen Dienstes von dem ersten Netzwerk auf das zweite Netzwerk für den mobilen Knoten (S214);
(e) Übertragen der in dem alten Zugangsrouter gepufferten Paketen an den neuen Zugangsrouter (S222); und
(f) Empfangen von Paketen in dem mobilen Knoten durch das zweite Netzwerk (S224)
wobei der Schritt (e) die Schritte enthält:
Übertragen einer Weiterleitungs-Nachricht von dem Heim-Agenten an einen alten Zugangsrouter (S220); und
Weiterleiten der gepufferten Pakete an den neuen Zugangsrouter durch den zwischen dem alten und dem neuen Zugangsrouter gebildeten Tunnel (S222).

2. Das Verfahren gemäß Anspruch 1, wobei der Schritt (d) die Schritte enthält:
Übertragen einer Router-Solicitation-Nachricht an den neuen Zugangsrouter von dem mobilen Knoten (S212); und
Übertragen einer Router-Advertisement-Nachricht von dem neuen Zugangsrouter an den mobilen Knoten als eine Antwort auf die Router-Solicitation-Nachricht (S214);
Übertragen einer BU-Nachricht (Binding Update-Nachricht) von dem mobilen Knoten an einen Heim-Agenten (S216);
Übertragen einer Bestätigungsnachricht an den mobilen Knoten als eine Antwort auf die BU-Nachricht (S218).

3. Das Verfahren gemäß Anspruch 1, wobei in dem Schritt (a) die Handover-Benachrichtigungsnachricht eine Zieladresse des neuen Zugangsrouters enthält, zu welchem der neue Knoten übergeben wird.

4. Das Verfahren gemäß Anspruch 1, wobei die Handover-Anfragenachricht eine Quelladresse des alten Zugangsrouters enthält, und wobei der Tunnel mit der Quelladresse als Austrittspunkt erzeugt wird.

5. Das Verfahren gemäß Anspruch 3, weiterhin umfassend den Schritt:
Erzeugen eines Tunnels mit der Zieladresse als Austrittspunkt (S210) nach dem Schritt (b).

6. Das Verfahren gemäß Anspruch 1, wobei das erste Netzwerk eines von WLAN-(wireless LAN) und WiMAX-Netzwerk (Worldwide Interoperability for Microwave Access) ist und das zweite Netzwerk das andere von WLAN- und WiMAX-Netzwerk ist.

7. Das Verfahren gemäß Anspruch 1, wobei das erste Netzwerk eines von WLAN-(wireless LAN) und WiBro-Netzwerk (wireless broband Internet), und das zweite Netzwerk das andere von WLAN- und WiBro-Netzwerk ist.

8. Das Verfahren gemäß Anspruch 1, wobei der mobile Knoten ein mobiles Internet-Protokoll v6 (MIPv6) installiert hat.

## Revendications

1. Procédé destiné à exécuter un transfert vertical entre différents réseaux sans fil sur la base d'un transfert indépendant du support (MIH), le procédé comprenant les étapes consistant à :
(a) tout en recevant des paquets par l'intermédiaire d'un premier réseau dans un noeud mobile (S200), vérifier un état de liaison du premier réseau de façon à transmettre, à partir du noeud mobile, un message de notification de transfert à un ancien routeur d'accès (S206) par l'intermédiaire duquel un service sans fil est fourni actuellement au noeud mobile ;
(b) transmettre, à partir de l'ancien routeur d'accès, un message de demande de transfert à un nouveau routeur d'accès (S208) de façon à former un tunnel de manière à sortir vers l'ancien routeur d'accès (S210) ;
(c) mettre en mémoire tampon dans l'ancien routeur d'accès des paquets à transmettre au noeud mobile par l'intermédiaire du premier réseau (B) ;
(d) faire passer le service sans fil du premier réseau au second réseau pour le noeud mobile (S214) ;
(e) transmettre au nouveau routeur d'accès les paquets mis en mémoire tampon dans l'ancien routeur d'accès (S222) ; et
(f) recevoir les paquets dans le noeud mobile par l'intermédiaire du second réseau (S224)
dans lequel l'étape (e) comprend les étapes consistant à :
transmettre au routeur d'accès un message de transfert à partir d'un agent local (S220) ; et
transférer les paquets mis en mémoire tampon au nouveau routeur d'accès par l'intermédiaire du tunnel formé entre l'ancien routeur d'accès et le nouveau routeur d'accès (S222).

2. Procédé selon la revendication 1, dans lequel l'étape (d) comprend les étapes consistant à :
transmettre un message de sollicitation de routeur au nouveau routeur d'accès à partir du noeud mobile (S212) ; et
transmettre au noeud mobile un message d'annonce de routeur à partir du nouveau routeur d'accès en tant que réponse au message de sollicitation de routeur (S214) ;
transmettre à l'agent local un message de BU (mise à jour de liaison) à partir du noeud mobile (S216) ;
transmettre un message d'accusé de réception au noeud mobile en tant que réponse au message de BU (S218).

3. Procédé selon la revendication 1, dans lequel, dans l'étape (a), le message de notification de transfert comprend une adresse de destination du nouveau routeur d'accès vers laquelle est transféré le noeud mobile.

4. Procédé selon la revendication 1, dans lequel le message de demande de transfert comprend une adresse de source de l'ancien routeur d'accès, et dans lequel le tunnel est généré avec l'adresse de source en tant que point de sortie.

5. Procédé selon la revendication 3, comprenant en outre l'étape consistant à :
générer un tunnel avec l'adresse de destination en tant que point de sortie (S210) après l'étape (b).

6. Procédé selon la revendication 1, dans lequel le premier réseau est l'un d'un réseau WLAN (réseau local sans fil) et d'un réseau WiMax (interopérabilité mondiale pour un accès hertzien), et le second réseau est l'autre du réseau WLAN et du réseau WiMAX.

7. Procédé selon la revendication 1, dans lequel le premier réseau est l'un d'un réseau WLAN (réseau local sans fil) et d'un réseau WiBro (Internet à large bande sans fil), et le second réseau est l'autre du réseau WLAN et du réseau WiBro.

8. Procédé selon la revendication 1, dans lequel le protocole Internet mobile v6 (MIPv6) est installé à l'intérieur du noeud mobile.
